# EUROPEAN PATENT APPLICATION

(11) **EP 1 424 643 A1**
(43) Date of publication of application: **02.06.2004**
(21) Application number: 02026248.1
(22) Date of filing: 26.11.2002
(51) Int. Cl.: G06F 17/60

(54) **Processing business schemas with predefined sequences and predefined documents on personal computer**

(71) Applicant: SAP Aktiengesellschaft, 69190 Walldorf (DE)
(72) Inventor: Stuhec, Gunther, 69117 Heidelberg (DE)

(57) **Abstract**

A computer program (101) for a personal computer (PC) is provided for a first computer (901) to participate in electronic business. In the program (101), a communication module (110, ebXML messaging, SOAP, and WSDL) supports communication (410) between the first computer (901) and a second computer (902). A schema module (120) loads a business schema (300/500) from a central repository (150). The business schema (300/500) is predefined sequence (300) of business transactions combined with documents that are assigned to the business transactions. The business schema (300/500) provides a predefined communication format (XML-based UBL) that is applied to the documents and that enables the first computer (901) to participate in electronic business with the second computer (902).

## Description

### Field of the Invention

The present invention generally relates to data processing and, more particularly, relates to computer systems, computer programs, and methods that support electronic business.

### Background of the Invention

Small companies - especially in the area of traditional craft professions - face challenges to participate in electronic business (or electronic collaboration). These companies need (a) to invest in complex and expensive computer systems to be installed at local computers, or (b) to register with market places at remote computers (access via browser and Internet). In both cases (a) (b), the companies are bound by the particulars of the local or remote computer systems. Changes lead to further costs for software/hardware, user training, registration and the like.

There is an ongoing need to provide improved computer systems, programs and methods that alleviate these and other problems.

### Short Description of the Drawings

- FIG. 1: is an overview about the invention illustrating a computer program of the invention in communication with a similar program, an application and a repository;
- FIG. 2: is a simplified flow chart diagram of a method of the present invention;
- FIG. 3: is a diagram of exemplary business transactions that belong to an exemplary schema for the exemplary business process PURCHASING;
- FIG. 4: is a diagram of exemplary business documents that also belong to the exemplary schema for PURCHASING;
- FIG. 5: is an exemplary business document PURCHASING ORDER;
- FIG. 6: is a an exemplary selector mask used in the computer program;
- FIG. 7: is a diagram with details for an optional service module;
- FIG. 8: is a diagram showing a separation of layout and data in communication between the first and second programs;
- FIG. 9: is a simplified XML-based UBL-schema in form of a UBL-diagram.
- FIG. 10: is a simplified type definition overview for the UBL-diagram of FIG. 9;
- FIG. 11: is a simplified XML statement of an exemplary delivery notification document in the schema of FIGS. 9-10; and
- FIG. 12: is a simplified computer system for implementing the present invention.

### Summary of the Invention

According to the invention, a program for a personal computer (PC) is specialized for business. The PC program enables business communication with similar PC programs (e.g. of small trade partners) and with the back-end of multi-tier client/server applications (e.g. of large trade partners). The PC programs and the applications load business schemas from a repository. A business process schema (hereinafter "business schema") is a predefined sequence of business transactions in combination with predefined documents assigned to each transaction.

For the user of the program, the invention has advantages. The user only needs the schemas. Installing the program on the PC is similarly easy as installing a commercial office suite program. Suites are commonly used in small companies. The suites offer word processing and spread-sheet programs. The business program enhances functionality to the suites. A user interface similar to that of the other suite programs eases learning and saves training costs. In the alternative, the user reads and writes the documents with the programs of the suite (that are familiar to him or her).

Preferably, the repository is a central repository. Communication to/from the PC program is accomplished via Internet. The schemas support electronic business and electronic collaboration. The same schemas are Preferably, the repository is a central repository. Communication to/from the PC program is accomplished via Internet. The schemas support electronic business and electronic collaboration. The same schemas are acceptable for the PC programs and for the application programs.

### Detailed Description of the Drawings

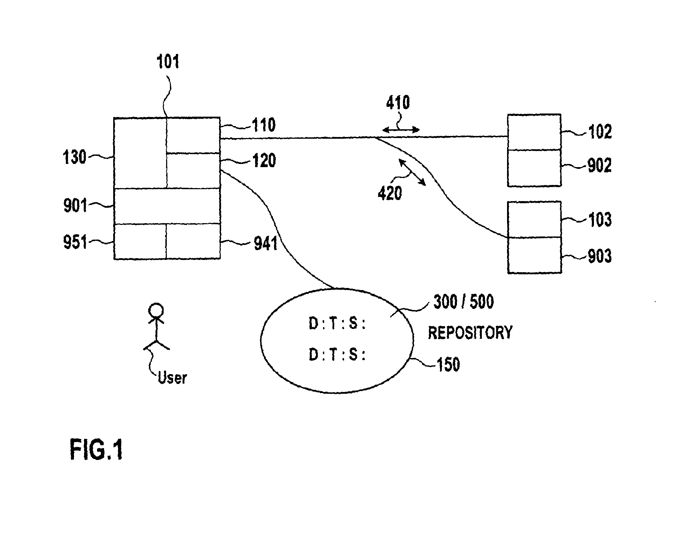

FIG. 1 is an overview about the invention illustrating first computer 901 with first program 101 (the "PC program"), second computer 902 with second program 102, optional third computer 902 with third program 103 (the "application"), and repository 150 (or "database"). Computer program 101 is a program for first computer 901 to participate in electronic business (and to perform collaboration tasks). Program 101 comprises communication module 110, schema module 120 and - optionally - service module 130.

Communication module 110 supports communication 410 between first program 901 and second computer 902 (with respective programs 101, 102).

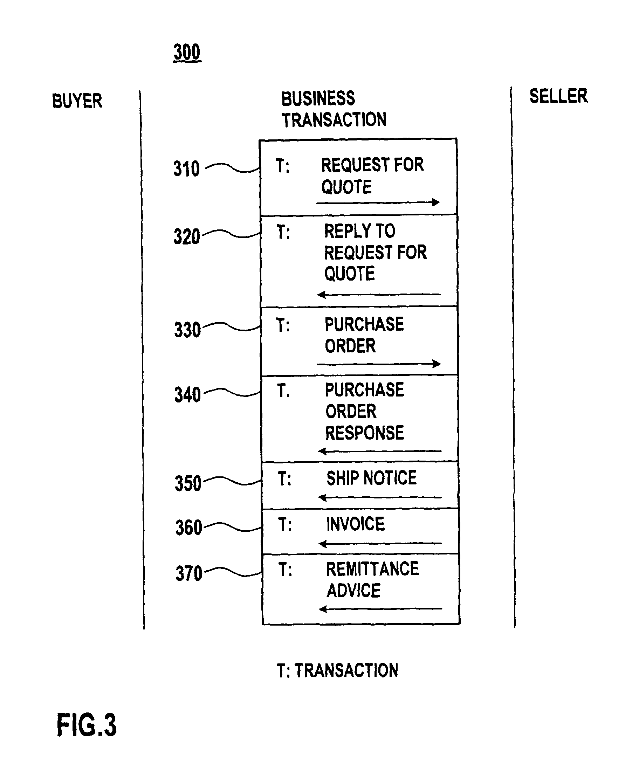

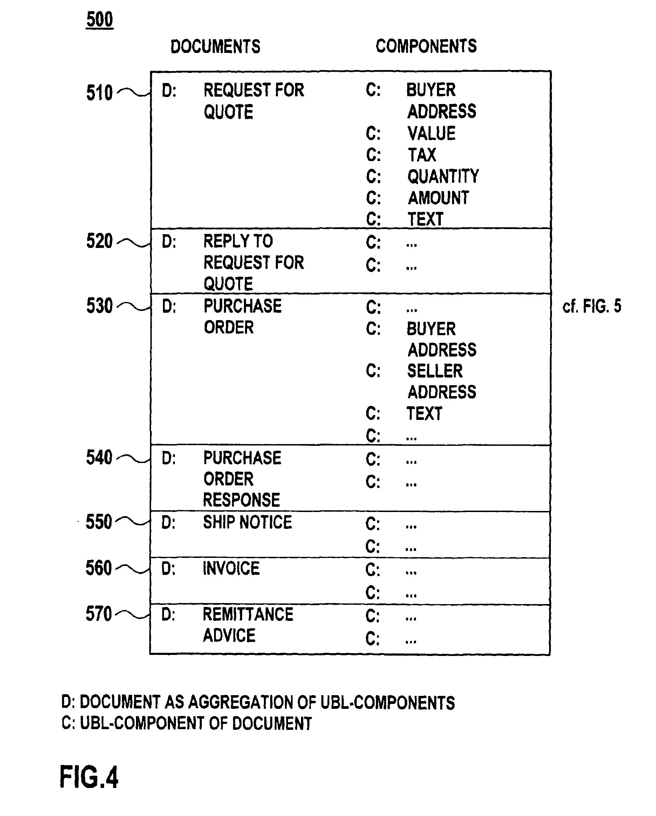

Schema module 120 loads business schema 300/500 from central repository 150. Business schema 300/500 is a predefined sequence of business transactions (cf. 310-370 in FIG. 3) combined with documents (cf. 510-570 in FIG 4) that are assigned to the business transactions (310-370). Business schema 300/500 provides a predefined communication format (e.g., XML-based UBL, ebXML BPSS) applied to the documents (510-570). The communication format enables first computer 901 to participate in electronic business with second computer 902. The documents (510-570) are based on UBL-compliant building blocks.

Besides from loading, schema module 120 is the business process module that creates, models, selects and processes documents.

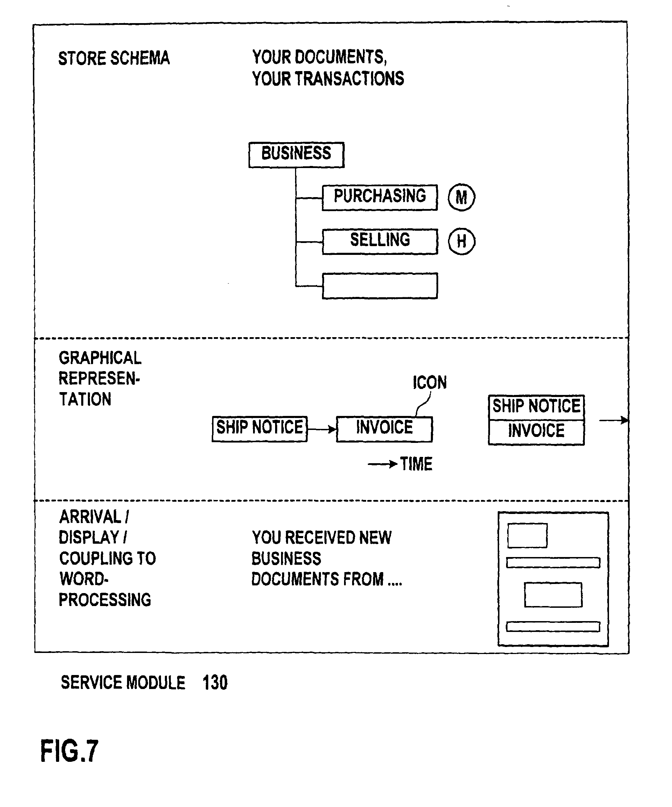

Service module 130 (details in FIG. 7) supports modules 110 and 120 by providing interaction with the user (of computer 901) through input device 941 (e.g., keyboard, mouse) and output device 951 (e.g., screen). Service module 130 also provides further functions, such as storage. Distinguishing modules for predefined functions is convenient for explanation; those of skill in the art can re-distribute the functions.

Preferably, second computer 902 is under control of second computer program 102 that has substantially the same functions as the first program 101 (i.e. program 102 similar to program 101).

Preferably, communication module 110 has the following further features:

Communication module 110 supports communication 420 with third computer 903 under control of third computer program 103. Program 103 is a business application. The communication format (provided by business schema 300/500) enables first computer 901 to participate in electronic business with third computer 903. Communication module 110 forwards the documents (310-370) to second computer 902 and to third computer 903 for interpreting and processing by second computer program 102 and third computer program 103, respectively.

Communication module 110 is adapted to use program resources (non-business) on first computer 901 that are word processing tools (e.g., to edit documents), email tools (e.g., to forward or to receive documents), browser tools, graphic user interface tools (e.g. to display and move icons).

It is an advantage that commercially available programs in a suite can be used so that program 101 is an add-on tool to enhance the functionality of the available programs.

Preferably, program 101 is adapted to be operated on first computer 901 being a personal computer (PC).

Turning to communication 420 between computer 901 and 903, the following is provided in computer 901 (an program 101): communication module 110 is adapted to support communication with a business application being the back-end of a client/server application (i.e. program 103). Communication module 110 supports communication with business application being an ERP (enterprise resource planning) system.

Client /server ERP applications are commercially available, for example, SAP Aktiengesellschaft, Walldorf (Baden), Germany, for example, under the name "R/3". Preferably, communication module 110 is adapted to communicate via a protocol such as: ebXML (electronic business XML) messaging, SOAP (Simple Object Access Protocol) and WSDL (Web Services Description Language; describing interfaces between application and web services).

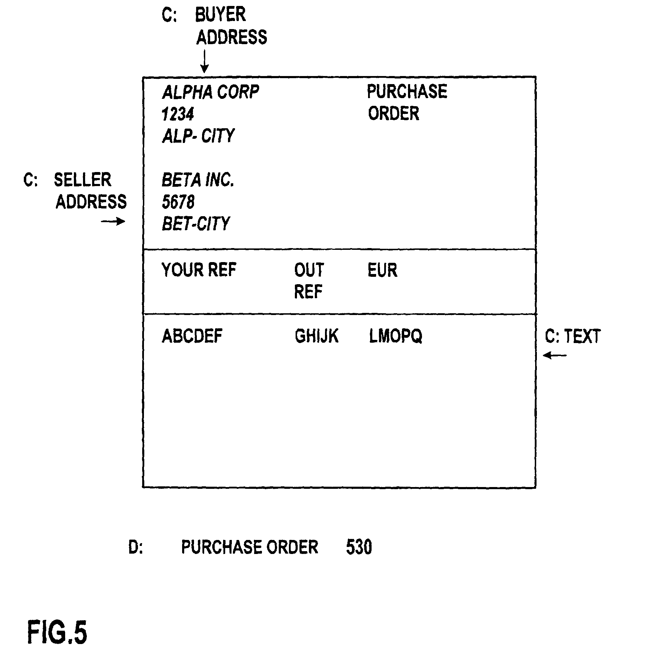

Preferably, schema module 120 has the following features: Schema module 120 provides a selection mask (125, cf. FIG. 5) to the user of the first computer (901) to select a context for identifying documents 510-570 and transactions 310-370. For actually presenting mask 125 to screen and to receive the selection, program 101 uses its service module 130.

For example, repository 150 is an ebXML repository or an SAP Integration Repository. XML-based vocabulary rules are currently developed under the term Universal Business Language (UBL, also called: "Unified Business Language").

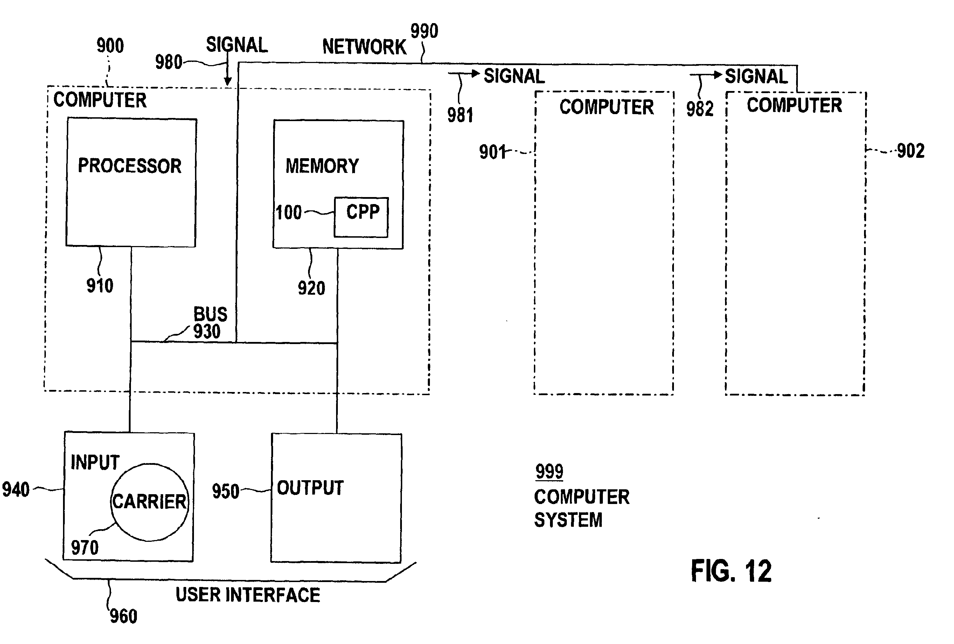

For convenience of explanation, further features that will be described in connection with program 101 are applicable for system and method as well. The description of the program is therefore also valid for system and method. As detailed and more general description of a network computer system is given at the end of the specification (cf. FIG. 12).

Download directions are defined from program 101 to repository 150, from program 102 to repository 150, and from program 103 to repository 150; an upload direction is defined as the opposite direction.

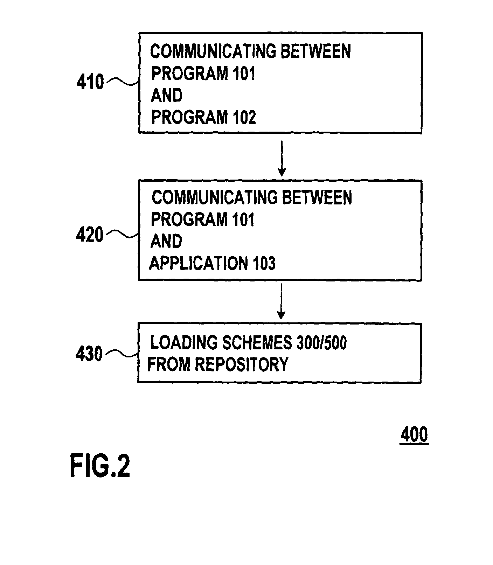

FIG. 2 is a simplified flow chart diagram of a method 400 of the present invention. Method 400 to participate in electronic business in a computer network system having computers 901, 902 and 903 has the following steps:

Step loading (430) business schema 300/500 from central repository 150 to first computer 901 as a predefined sequence of business transactions (310-370 in electronic business that computer 901 performs with computer 902 and with computer 903). The sequence uses a predefined communication format (explained above) that is used by computer 902 and by computer 903.

Step communicating (410, 420) according to business schema 300/500 between computers 901, 902, 903. Program 101 on computer 901 interacts with program 102 on computer 902 and interacts with a business application 103 on computer 903.

As mentioned, step communicating is supported by communication module 110 on computer 901.

FIG. 3 is a diagram of exemplary business transactions that belong to an exemplary schema 300/500 for the exemplary business process PURCHASING. Schema 300/500 can be used with other processes as well. PURCHASING is defined between BUYER and SELLER, companies or persons that operate, for example, computers 901, 902 (with programs 101, 102), respectively. PURCHASING can also be performed between computers 901/903 (as illustrated, cf. FIG. 1) and computers 902/903.

Exemplary transactions from transaction 310 REQUEST FOR QUOTE to transaction 370 REMITTANCE ADVICE are indicated with directions (BUYER TO SELLER or vice versa). This sequence is usually predefined. The user of computer 901 can modify the sequence (cf. FIG. 7).

FIG. 4 is a diagram of exemplary business documents that also belong to the exemplary schema for PURCHASING. Documents 510-570 (D:) are aggregations of UBL-components (C:). For convenience of explanation, the documents 510-570 have names that correspond to transactions 310-370 (cf. FIG. 3) from REQUEST to REMITTANCE. Exemplary components are listed for document 310 (REQUEST) from C: BUYER ADDRESS to C: TEXT. Document 530 is further illustrated in connection with FIG. 5.

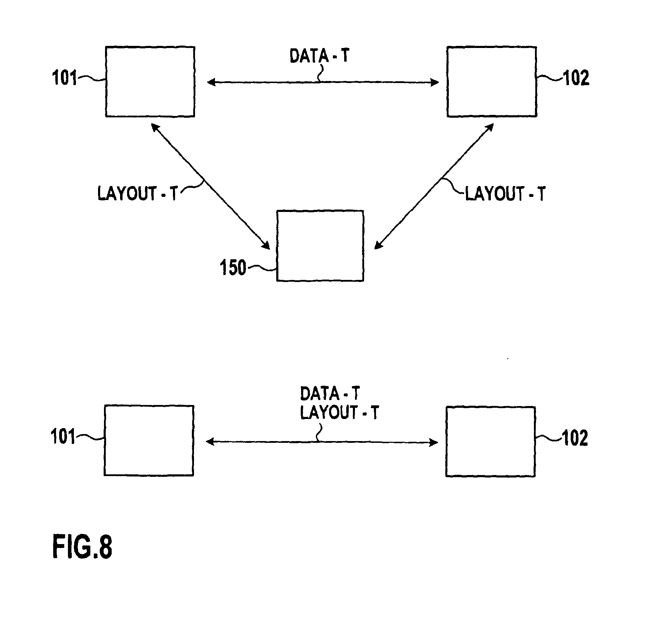

FIG. 5 is exemplary business document 530 PURCHASING ORDER. Exemplary components from C: BUYER ADDRESS to C: TEXT are given at predefined layout positions (cf. templates, FIG. 8). The user has already typed in content data like ALPHA CORP for C: BUYER ADDRESS. Communicating with the predefined format allows that the recipient of document (i.e. SELLER with program 102) receives data in a form suitable for processing (e.g., preparing the PURCHASE ORDER RESPONSE document 540 following in the sequence next).

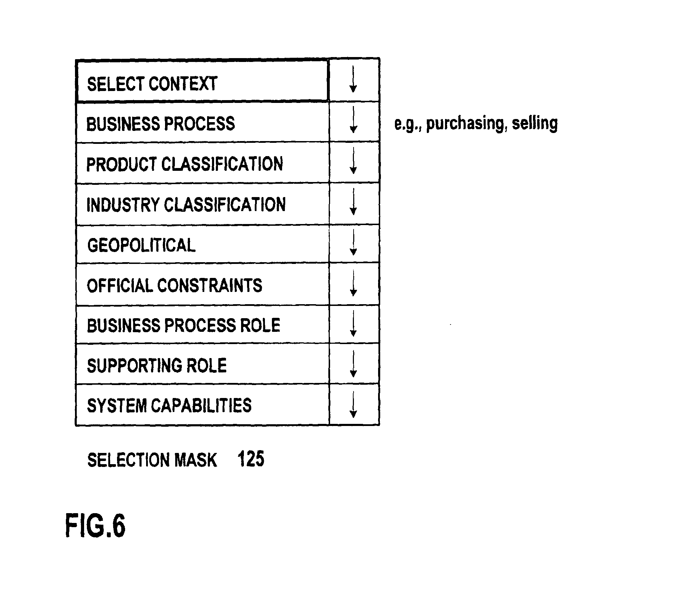

FIG. 6 is exemplary selector mask 125 used in computer program 101. For example, the context is selected from business process (e.g., purchasing, FIG. 3-5), product classification (e.g. bred), industry classification (e.g., bakery), geopolitical (e.g., Germany), official constraints (e.g., specific laws for bakeries), business process role (e.g., buyer), supporting role (e.g., third party like service providers), and system capabilities (standard or physical system constraints).

It is an advantage that program 101 is independent from contexts (e.g., independent from product or industry) and that program 101 can operate in different contexts. Selection mask 125 has pull-down options (for example to select "purchasing" as a business process).

FIG. 7 is a diagram with details for service module 130. The figure illustrates additional functions of service module 130 on the left side by keywords and illustrates exemplary visualizations on the right side by screen icons or document previews.

Service module 130 stores downloaded schema 300/500 locally on the first computer 901. Service module 130 modifies schema 300/500 in cooperation with the user (of computer 901). It is an advantage to store often-used schemas in computer 901 (e.g. supporting the re-use of documents). Persons of skill in the art can implement storing, for example, by a local database on computer 901. Also, instances of documents D: (with components C:) can be stored separately depending on the type of component. For example, instances of C: ADDRESS are stored in address tables. The figures illustrate a simplified example by showing the tree YOUR DOCUMENTS, YOUR TRANSACTIONS for the context BUSINESS. Modifications are indicated to the user (e.g., symbol: M in a circle). Harmonization (for example with schemas in repository 150) is indicated to the user (e.g., symbol H: in circle).

More in general, service module 130 combines input received from the user of program 101 with data from the repository to data that goes into business document 500. It is an advantage to combine manual input with automatic input. The user is in full control of the business.

Service module 130 cooperates with schema module 120 to forward business documents 500 with input data into repository 150. Sending modified schema in reverse direction (upload direction) to the repository is convenient for harmonization purposes.

Service module 130 uses graphic representations on an output device (951, e.g. screen) of computer 901 to show the current status in the sequence of business schema 300/500 and to modify the sequence. As illustrated by simplified example under the keyword GRAPHICAL REPRESENTATION, the user changes the sequence order from "step 350 (ship notice) prior to step 360 (invoice)" as in FIG. 3 to "step 350 simultaneous with step 360". As illustrated, the user just drags icons labeled "SHIP NOTICE" and "INVOICE" from left/right position to above/below position.

Service module 130 indicates the arrival of documents 510-570 at computer 901 and opens documents 510-570 in the layout that has been defined by the sender of the documents 510-570 (e.g., by program 102 or 103). As illustrated under the keyword ARRIVAL/DISPLAY, service module 130 displays a text (YOU HAVE RECEIVED ... see illustrated on the left) and opens the document by a word processing tool or a spreadsheet tool (i.e. part of the office suite) in the format (see illustration on the right).

Also, service module 130 identifies to transactions that follows in the sequence: D: INVOICE (document 560, cf.

FIG. 4) is followed by D: REMITTANCE ADVICE (document 570). Therefore, service module 130 informs the user and loads the REMITTANCE. This feature is provided because transactions 300 (of schema 300/500) are portions for performing workflows task (on first computer 901).

FIG. 8 is a diagram showing a separation of layout and data in communication between first program 101 and second program 102 (on computers 901, 902). Optionally, computer program 101 supports the separation of layout data of documents (500) and business data of documents. This separation is made possible by the technical coding for the format (e.g., XML tags). The coding remains hidden from the user who sees icons (cf. FIG. 7) or text (like "ADDRESS·'). The user may use suite programs to changes the layout of a documents without changing the schema.

The documents (e.g., 540 D: Purchase Order, cf. FIGS. 4-5) have 2 templates: The first template DATA-T is provided for data content (e.g., actual address data "ALPHA CORP..." for C: ADDRESS) and for semantic content (i.e. meaning of the components). The second template LAYOUT-T is provided for layout information (e.g., C: ADDRESS top left position) and formatting information (e.g., C: ADDRESS in italics). LAYOUT-T is conveniently provided in XSL FO (Extensible Stylesheet Language - Formatting Objects). The specification is available to the public from the W3C (Word Wide Web Consortium).

The templates can be provided for each document (one template per document) or for each component (one template per component). The second template enriches the first template; there is not need to send the second template with every communication.

As illustrated at the top, layout goes via repository 150 (public, standard), but data goes directly (private, business data). Instead of a full LAYOUT-T, programs 101/102 optionally send layout identification to repository 150 that provides the full LAYOUT-T. This approach saves communication bandwidth by avoiding repeated sending of templates. As illustrated below, in the alternative, both layout and data can go directly. The separation is likely applicable for communication between programs 102/103 and 101/103. The separation is applicable in all directions (i.e. to and from programs 101, 102, 103, download, upload directions).

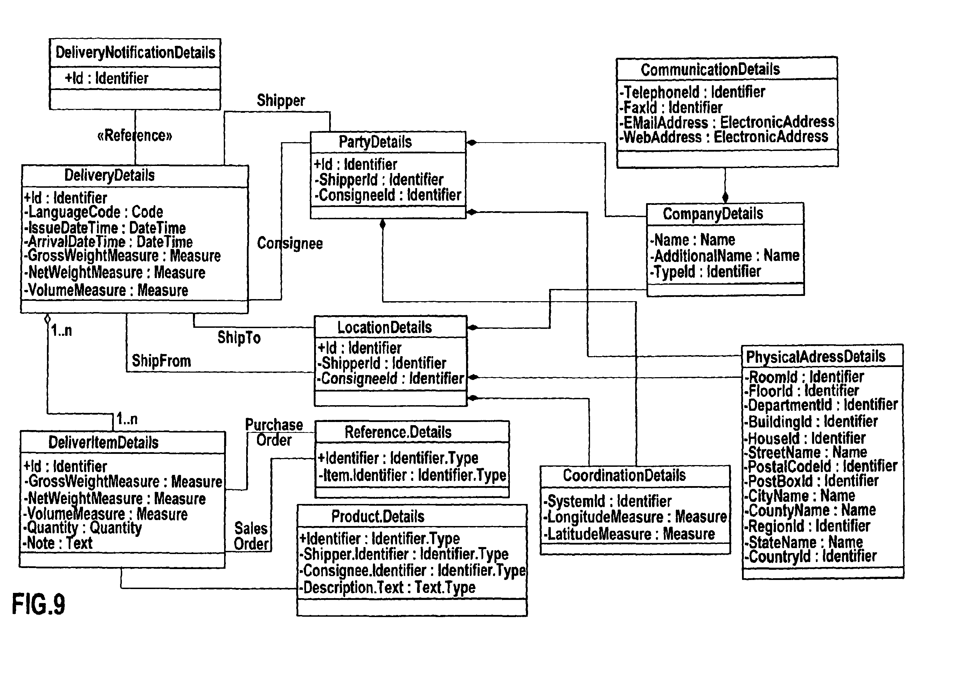

FIG. 9 is a simplified XML-based UBL-diagram. Given are components such as "Details" and documents such as "DeliveryNotification" (cf. 330/550, upper left corner of the figure). The term "details" in the headlines indicates that components are aggregated.

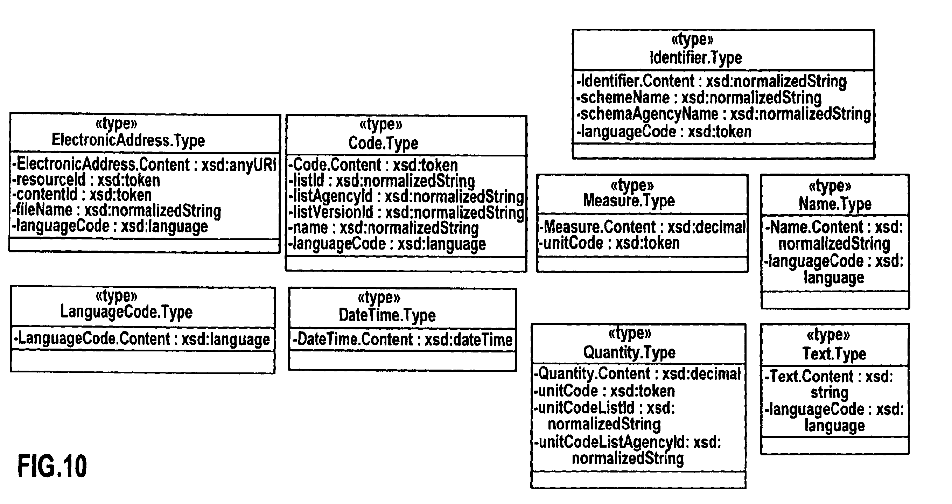

FIG. 10 is a simplified type definition overview for the UBL-diagram of FIG 9. Details refer to data type definitions (e.g., URI unified resource indicator for addresses).

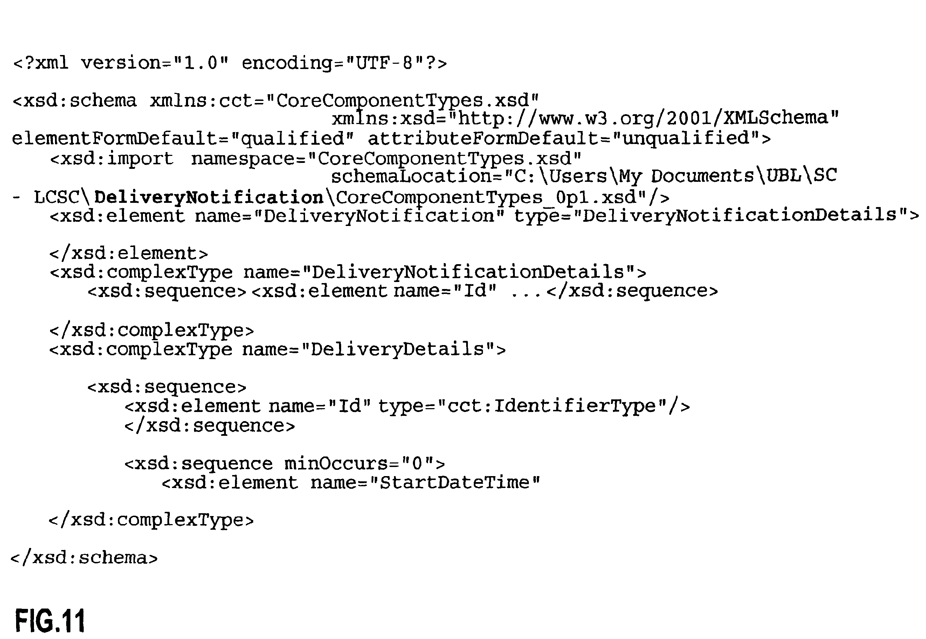

FIG. 11 is a simplified XML statement of an exemplary delivery notification document in the schema of FIGS. 9-10. The schema has been loaded to a directory on personal computer 901. The example gives details for the document/transaction "DELIVERY NOTIFICATION". The XML statement is equivalent to the diagrams of FIGS. 9-10.

The present invention is now summarized as system 901/902 for executing electronic business. System 901/902 has first computer 901 and second computer 902 interconnected and communicating through a network. Computers 901 and 902 are controlled by first program 101 and second program 102, respectively, and network interfaces (illustrated by communication module 110) for communicating through the network. Computer 901 has a display (e.g., screen 951) for displaying data and operations related to the business and a user input (e.g., keyboard 941) for allowing a user (of computer 901) to provide inputs for executing the business. As part of program 101, first computer 901 has schema module 120 to load business schema 300/500 from central repository 150. Business schema 300/500 is a predefined sequence of business transactions 310-370. Documents 510-570 are assigned to business transactions 310-370. Business schema 300/500 uses a predefined format that enables business communication between computers 901 and 902.

Program 102 on computer 902 has a schema module with features (i.e., load schema 300/500 from repository, enable business communication) that are substantially equivalent to schema module 120 of program 101.

### Computer System in General

FIG. 12 is a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900. Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920).

Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals.

While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals. Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

### References

- 101,102,103: programs
- 110: communication module
- 120: schema module
- 125: selection mask
- 130: service module
- 150: repository
- 300,3x0: business transactions
- 300/500: schema
- 400,4xx: method, method steps
- 500,5x0: business documents
- 901,902,903: first, second, third computers
- 941: input device of first computer
- 951: output device of first computer
- 9xx: computer components
- BPSS: Business Process Specification Schema
- C:: UBL-component of document
- D:: document as aggregation of UBL-components
- ERP: Enterprise Resource Planning
- FO: Formatting Objects
- T:: transaction
- UBL: Universal Business Language
- W3C: Word Wide Web Consortium
- XML: Extensible Markup Language
- XSL: Extensible Stylesheet Language

## Claims

1. A computer program (101) with instructions for a first computer (901) to participate in electronic business, the computer program (101) comprising:
a communication module (110) to support communication (410) between the first computer (901) and a second computer (902);
a schema module (120) to load a business schema (300/500) from a central repository (150), the business schema being a predefined sequence (300) of business transactions (310-370) combined with documents (510-570) that are assigned to the business transactions (310-370), wherein the business schema (300/500) provides a predefined communication format applied to the documents (510-570), wherein the communication format enables the first computer (901) to participate in electronic business with the second computer (902).

2. The computer program (101) of claim 1, wherein the second computer (902) is under control of a second computer program (102) that has substantially the same functions as the first program (101).

3. The computer program (101) of claim 2, wherein the communication module (110) supports communication (420) with a third computer (903) under control of third computer program (103) being a business application, and wherein the predefined communication format provided by the business schema (300/500) enables the first computer (901) to participate in electronic business with the third computer (903).

4. The computer program (101) of claim 3, wherein the communication module (110) forwards the documents (310-370) to the second computer (902) and to the third computer (903) for interpreting and processing by the second and third computer programs (102, 103), respectively.

5. The computer program (101) of claim 1, adapted to be operated on the first computer (901) being a personal computer.

6. The computer program (101) of claim 1, wherein the communication module (110) is adapted to use program resources on the first computer (901) that are selected from the group of: word processing tools, email tool, browser tool, and graphic user interface tool.

7. The computer program (101) of claim 7, wherein the communication module (110) is adapted to support communication with a business application being the back-end of a client/server application.

8. The computer program (101) of claim 1, wherein the communication module (110) supports communication with the business application (103) being an ERP system.

9. The computer program (101) of claim 1, wherein the communication module (110) is adapted to communicate via a protocol selected from the group of: ebXML messaging, SOAP, and WSDL.

10. The computer program (101) of claim 1, wherein the schema module (120) provides a selection mask (125) to the user of the first computer (901) to select a context for identifying documents (510-570) and transactions (310-370).

11. The computer program (101) of claim 10, wherein the context is selected from the group of: business process, product classification, industry classification, geopolitical, official constraints, business process role, supporting role, and system capabilities.

12. The computer program (101) of claim 10, wherein the selection mask (125) has pull-down options.

13. The computer program (101) of claim 1, wherein a service module (130) combines input received from the user of the program (101) with data from the repository to data that goes into the business document (500).

14. The computer program (101) of claim 13, wherein the service module (130) cooperates with the schema module (120) to forward business documents (500) with input data into the repository (150).

15. The computer program (101) of claim 13, wherein the service module (130) stores the downloaded schema (300/500) locally on the first computer (901).

16. The computer program (101) of claim 13, wherein the service module (130) modifies the schema (300/500) in cooperation with the user of the first computer (901).

17. The computer program (101) of claim 13, wherein the service module (130) uses graphic representations on an output device (951) of the first computer (901) to show the current status in the sequence of the business schema (300/500) and to modify the sequence.

18. The computer program (101) of claim 1, wherein the service module (130) indicates the arrival of documents (510-570) to the first computer (901) and opens the documents (510-570) in the layout that has been defined by the sender of the documents (510-570).

19. The computer program (101) of claim 1, wherein the communication format comprises XML-based UBL.

20. The computer program (101) of claim 1, wherein layout data of documents and business data of documents are separated.

21. A method to participate in electronic business in a computer network system having a first computer (901), a second computer (902) and a third computer (903), the method comprising the following steps:
loading (430) a business schema (300/500) from a central repository (150) to the first computer (901) as a predefined sequence (300) of business transactions (310-370) and documents (510-570) in electronic business that the first computer (901) performs with the second computer (902) and with the third computer (903), wherein the sequence has a predefined format that is used by the second computer (902) and by the third computer (903); and
communicating (410, 420) according to the business schema (300/500) between the computers (901, 902, 903), wherein a program (101) on the first computer (901) interacts with a second program (102) on the second computer (902) and interacts with a business application (103) on a third computer (903).

22. The method of claim 22, wherein step communicating is supported by a communication module (110) on the first computer and wherein the communication format comprises XML-based UBL.

23. A system (901/902) for executing electronic business, the system (901/902) with first (901) and second (902) computers interconnected and communicating through a network, the first and second computers (901, 902) being controlled by first and second programs (101, 102), respectively, and network interfaces for communicating through the network, the first computer (901) having a display for displaying data and operations related to the business and a user input for allowing a user of the first computer (901) to provide data input for executing the business, the system (901/902) **characterized in that** the first computer (901), as part of the first program (101) has a schema module (120) to load a business schema (300/500) from a central repository (150), the business schema (300/500) being a predefined sequence (300) of business transactions (310-370) combined with documents (510-570) that are assigned to the business transactions (310-370), wherein the business schema (300/500) uses a predefined format that enables business communication between the first and second computers (901, 902).

24. The system (901/902) of claim 23, wherein the second program (102) on the second computer (902) has a schema module with features that are substantially equivalent to the schema module (120) of the first program (101).
